# FASCICULE DE BREVET EUROPEEN

(11) **EP 2 099 623 B1**
(45) Date de publication et mention de la délivrance du brevet: **09.06.2010**
(21) Numéro de dépôt: 07822807.9
(22) Date de dépôt: 22.11.2007
(51) Int. Cl.: B60C 11/16

(54) **ENSEMBLE PNEUMATIQUE ET CRAMPONS AVEC FIXATION PAR CLIPSAGE**
AUS EINEM REIFEN UND STOLLEN MIT KLEMMBEFESTIGUNG BESTEHENDE ANORDNUNG
ASSEMBLY CONSISTING OF A TYRE AND STUDS WITH CLIP FASTENING

(30) Priorité: 28.11.2006 FR 0610498
(43) Date de publication de la demande: 16.09.2009
(73) Titulaire: Société de Technologie Michelin, 63000 Clermont-Ferrand (FR); MICHELIN Recherche et Technique S.A., 1763 Granges-Paccot (CH)
(72) Inventeur: DURAT, Matthieu, 63100 Clermont-Ferrand (FR); GUICHON, Cyril, 29650 Greer South Carolina (US)
(74) Mandataire: Randl, Oliver Georg
(86) Numéro de dépôt international: PCT/EP2007/062678
(87) Numéro de publication internationale: WO 2008/065037

(56) Documents cités:
- WO-A-2005/002885
- DE-A1- 1 505 173
- DE-A1- 3 913 452
- FR-A- 1 342 598
- FR-A- 1 403 818
- FR-A- 1 433 569
- FR-A1- 2 182 750

## Description

L'invention concerne le domaine des pneumatiques, en particulier des pneumatiques spécialement conçus pour les conditions hivernales, et plus particulièrement un ensemble comprenant un pneumatique pourvu d'une pluralité d'alvéoles, spécialement adaptées pour coopérer avec des crampons pourvus de portions insérables correspondantes.

Les pneumatiques à crampons possèdent des avantages indéniables en terme de comportement dans des conditions hivernales difficiles telles qu'un revêtement glacé. Le contact avec la glace, et plus particulièrement la pénétration du crampon dans la glace permet de compenser la diminution d'adhérence constatée au niveau des éléments de sculpture de la bande de roulement.

Malheureusement, les pneumatiques équipés de crampons possèdent en contrepartie certains inconvénients qui perdurent au fil des nouvelles générations de produits. D'une part les opérations de cloutage des pneumatiques sont fastidieuses et délicates à mettre en oeuvre, d'autre part, en roulage, les crampons sont souvent expulsés de leur logement ou cavité. Dans certains cas, les pertes de crampons sont non négligeables, et entraînent des pertes d'efficacité des pneumatiques.

Enfin, soulignons qu'en utilisation courante, les pneus cloutés roulent souvent sur des surfaces non enneigées ou non glacées. Le contact direct entre les crampons et le revêtement peut entraîner certaines formes d'usure du revêtement.

Il est donc souhaitable de limiter les phénomènes d'expulsion des crampons, et de favoriser un contact avec un minimum d'agression lors du roulage sur le revêtement non recouvert de neige ou de glace. Le document FR-A-1 403 818 décrit les caractéristiques techniques du préamble de la revendication 1.

Un objectif de la présente invention est de réduire ou limiter les phénomènes d'expulsion des crampons des cavités dans lesquelles ceux-ci sont fixés.

Un autre objectif de la présente invention consiste à faciliter les opérations de cloutage et améliorer la précision de pose des crampons.

Un autre objectif de la présente invention consiste à limiter ou réduire les contact agressifs entre les crampons et le revêtement nu.

Pour ce faire, la présente invention propose un ensemble comportant :
- un pneumatique pourvu d'une pluralité d'alvéoles, chaque alvéole comportant un portion cylindrique ouverte sur l'extérieur de la bande de roulement du pneumatique et étant adaptée pour coopérer avec un crampon,
- une pluralité de crampons, chacun comportant une mise disposée à l'une des extrémités axiales, une tête disposée à l'autre extrémité axiale, un corps central 4 disposé entre ladite mise et ladite tête,
- ledit ensemble étant **caractérisé en ce que** :

- chacune desdites alvéoles comporte au moins un bossage périphérique agencé dans la portion cylindrique situé à une distance D de la surface de la bande de roulement du pneumatique;
- ledit corps central de chacun des crampons comporte au moins une gorge périphérique située à une distance C du haut du corps central dudit crampon ;
- la distance D étant comprise entre 0.6*C et 1.2*C et de préférence sensiblement égale à C.

Par « haut » du corps central, on entend la portion d'extrémité du corps central, du côté de la mise.

Un tel agencement permet d'optimiser le positionnement des crampons dans les alvéoles prévues au niveau de la bande de roulement du pneumatique. Les opérations de cloutage des pneumatiques sont ainsi facilitées par le phénomène d'auto-positionnement. Ce même auto-positionnement permet l'obtention d'une position bien déterminée de la mise plutôt qu'une position plus ou moins aléatoire comme c'était le cas auparavant. On obtient donc une sorte d'auto-blocage permettant aussi de maîtriser l'inclinaison du crampon sous sollicitation lors du roulage, procurant un effet anti-basculement. Enfin, la présence de ces gorges occasionne une diminution du poids du crampon, ce qui contribue à la diminution de l'usure des revêtements.

De manière avantageuse, la gorge des crampons occupe la totalité du pourtour du crampon. Dans un tel cas, il est également avantageux que le bossage des alvéoles occupe également la totalité du pourtour de l'alvéole.

Selon un mode de réalisation avantageux, chaque gorge comporte un rayon A mesuré depuis un point situé à l'extérieur de celle-ci, chaque bossage comporte un rayon B mesuré depuis un point situé à l'extérieur de celui-ci , chaque crampon et chaque alvéole correspondantes étant dimensionnés de sorte que le rayon A de la gorge du crampon soit inférieur au rayon B du bossage correspondant de l'alvéole.

Selon une variante avantageuse de ce dernier mode de réalisation, le rayon A de la gorge du crampon est sensiblement égal à la moitié du rayon B du bossage de l'alvéole. Cela permet l'adéquation entre la gorge indéformable du crampon et le bossage de l'alvéole une fois celle-ci étirée, c'est-à-dire lorsqu'elle à épousée la forme du crampon après l'opération de cloutage.

Selon un exemple de réalisation avantageux, le rayon A de la gorge comporte une valeur comprise entre 0.2 et 2 mm.

L'invention prévoit par ailleurs un crampon pour un ensemble tel que préalablement décrit, comportant une mise disposée à l'une des extrémités axiales, une tête disposée à l'autre extrémité axiale, un corps central disposé entre ladite mise et ladite tête, dans lequel le corps central comporte au moins une gorge périphérique prévue sur le profil externe dudit corps, située à une distance C du haut du corps central 4 dudit crampon, ledit crampon étant adapté pour insertion dans une alvéole comportant au moins un bossage correspondant situé à une distance D de la surface de la bande de roulement du pneumatique, la distance D étant comprise entre 0.6*C et 1.2*C et de préférence sensiblement égale à C.

Enfin, l'invention prévoit également un pneumatique pour un ensemble tel que préalablement présenté, pourvu d'une pluralité d'alvéoles, chaque alvéole comportant un portion cylindrique ouverte sur l'extérieur de la bande de roulement du pneumatique chacune desdites alvéoles comportant au moins un bossage périphérique agencé dans la portion cylindrique et situé à une distance D de la surface de la bande de roulement du pneumatique, chaque alvéole étant adaptée pour coopérer avec un crampon, comportant une mise disposée à l'une des extrémités axiales, une tête disposée à l'autre extrémité axiale, un corps central 4 disposé entre ladite mise et ladite tête, ledit corps central de chacun des crampons comportant au moins une gorge périphérique située à une distance C du haut du corps central dudit crampon, et la distance D étant comprise entre 0.6*C et 1.2*C et de préférence sensiblement égale à C.

D'autres caractéristiques et avantages de l'invention ressortent de la description faite ci-après en référence aux dessins annexés qui montrent, à titre d'exemples non limitatifs, des formes de réalisation de l'objet de l'invention. Dans les différentes figures, les crampons sont présentés hors des alvéoles pour plus de clarté et faciliter la visualisation des caractéristiques de chacun des éléments :

la figure 1 montre les différents éléments de l'ensemble selon l'invention, avec d'une part une vue en élévation d'un crampon et une vue en coupe d'une portion de bande de roulement de pneumatique comportant une alvéole destinée à coopérer avec le crampon représenté;

les figures 2 et 3, présentent les mêmes éléments qu'à la figure 1, avec la représentation de certaines dimensions importantes ;

la figure 4 présente un autre exemple des différents éléments de l'ensemble selon l'invention, avec d'une part une vue en élévation d'un crampon et une vue en coupe d'une portion de bande de roulement de pneumatique comportant une alvéole destinée à coopérer avec le crampon représenté.

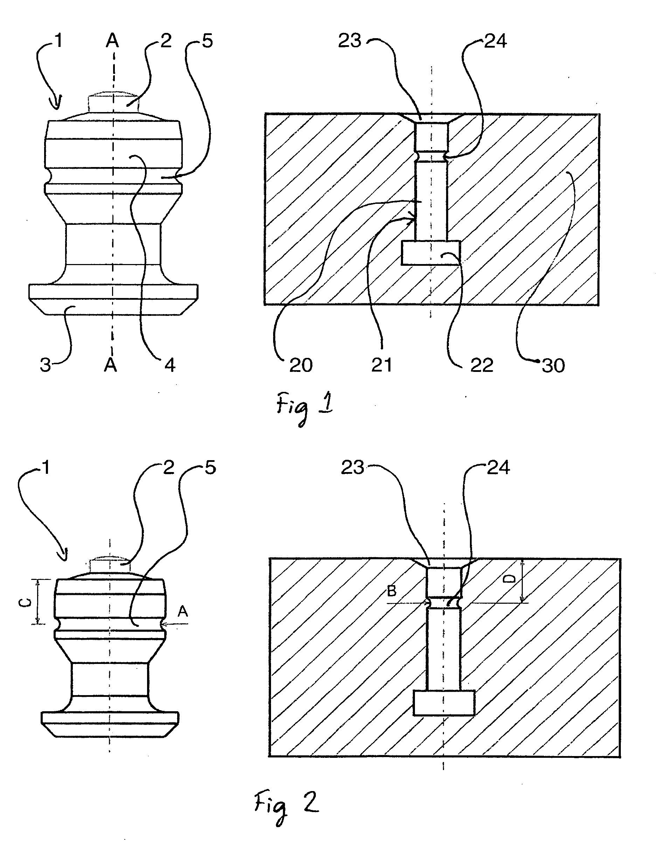

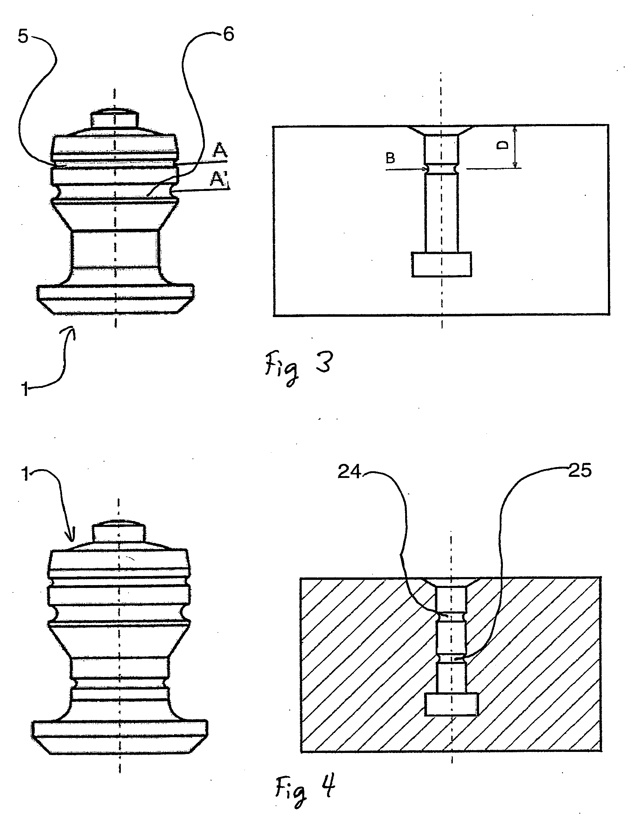

Les figures 1 à 4 présentent des exemples de réalisation de l'ensemble selon l'invention. Cet ensemble comporte d'une part un pneumatique pourvu d'une pluralité de d'alvéoles 20 prévues dans la bande de roulement 30 du pneumatique, et d'autre part une pluralité de crampons 1 disposés dans les alvéoles.

En ce qui concerne les crampons, un axe A-A longitudinal permet d'orienter leur profil. Il s'agit habituellement d'un profil généralement cylindrique centré sur l'axe A-A. Les deux extrémités sont définies d'une part par une mise 2, et d'autre part par une tête 3, destinée à l'ancrage du crampon dans l'alvéole du pneumatique. La mise constitue la portion destinée à entrer en contact avec le sol: soit la glace, la neige, ou le revêtement nu. La mise peut avantageusement être réalisée à l'aide d'un matériau distinct de celui du reste du crampon. Cela permet d'utiliser un matériau plus dur pour cette partie, sujette à de très fortes sollicitations mécaniques. Cela permet par ailleurs de réaliser, pour certaines familles de produits, un corps en matériau moulé ou injecté, sur lequel on fixe une mise. Bien évidemment, on peut aussi utiliser des crampons constitués d'un matériau unique.

La portion supérieure du corps comporte, sous la mise 2, un corps central 4, possédant un profil cylindrique. Le corps central 4 de chacun des crampons comporte au moins une gorge périphérique 5 située à une distance C du haut du corps central 4 dudit crampon. Par « haut » du corps central, on entend la portion d'extrémité du corps central, du côté de la mise.

En ce qui a trait au pneumatique, il est pourvu d'une pluralité d'alvéoles 20, chaque alvéole comportant un portion cylindrique 21 ouverte sur l'extérieur de la bande de roulement 30 du pneumatique et est adaptée pour coopérer avec un crampon 1.

Chacune desdites alvéoles 20 comporte au moins un bossage périphérique 24 agencé dans la portion cylindrique 21 situé à une distance D de la surface de la bande de roulement du pneumatique.

Les alvéoles et crampons d'un ensemble sont configurées et dimensionnés de sorte que la distance D soit comprise entre 0.6*C et 1.2*C et de préférence sensiblement égale à C.

La gorge 5 peut donc être agencée de façon à occuper 360° ou moins de la périphérie. Selon divers modes de réalisation, elle peut parcourir une ou plusieurs portions partielles du pourtour du crampon.

Les bossages 24 sont de forme et dimension adaptées aux gorges correspondantes. Ainsi, elles peuvent être agencée de façon à occuper 360° ou moins de la périphérie. Selon divers modes de réalisation, elles peuvent parcourir une ou plusieurs portions partielles du pourtour des alvéoles, bien sûr en fonction du dimensionnement des gorges correspondantes.

Dans les exemples illustrés, chaque gorge comporte un rayon A mesuré depuis un point situé à l'extérieur de celle-ci, chaque bossage comporte un rayon B mesuré depuis un point situé à l'extérieur de celui-ci , chaque crampon et chaque alvéole correspondantes étant dimensionnés de sorte que le rayon A de la gorge 5 du crampon 1 soit inférieur au rayon B du bossage 24 correspondant de l'alvéole, et de préférence sensiblement égal à la moitié du rayon B du bossage 24 de l'alvéole 20.

A titre d'exemple non limitatif, le rayon A de la gorge 5 comporte une valeur comprise entre 0.2 et 2 mm.

## Revendications

1. Ensemble comportant :
• un pneumatique pourvu d'une pluralité d'alvéoles (20), chaque alvéolé comportant un portion cylindrique (21) ouverte sur l'extérieur de la bande de roulement (30) du pneumatique et étant adaptée pour coopérer avec un crampon (1),
• une pluralité de crampons, chacun comportant une mise (2) disposée à l'une des extrémités axiales, une tête (3) disposée à l'autre extrémité axiale, un corps central (4) disposé entre ladite mise (2) et ladite tête (3),
• ledit ensemble étant **caractérisé en ce que** :
• chacune desdites alvéoles (20) comporte au moins un bossage périphérique (24) agencé dans la portion cylindrique (21) situé à une distance D de la surface de la bande de roulement (30) du pneumatique;
• ledit corps central (4) de chacun des crampons comporte au moins une gorge périphérique (5) située à une distance C du haut du corps central (4) dudit crampon ;
• la distance D étant comprise entre 0.6*C et 1.2*C et de préférence sensiblement égale à C.

2. Ensemble selon la revendication 1, dans lequel la gorge (5) des crampons (1) occupe la totalité du pourtour du crampon.

3. Ensemble selon la revendication 2, dans lequel le bossage (24) des alvéoles occupe la totalité du pourtour de l'alvéole.

4. Ensemble selon la revendication 1, dans lequel chaque gorge comporte un rayon A mesuré depuis un point situé à l'extérieur de celle-ci, chaque bossage comporte un rayon B mesuré depuis un point situé à l'extérieur de celui-ci , chaque crampon et chaque alvéole correspondantes étant dimensionnés de sorte que le rayon A de la gorge (5) du crampon (1) soit inférieur au rayon B du bossage (24) correspondant de l'alvéole.

5. Ensemble selon la revendication 4, dans lequel le rayon A de la gorge (5) du crampon (1) est sensiblement égal à la moitié du rayon B du bossage (24) de l'alvéole (20).

6. Ensemble selon l'une des revendications 2 à 5, dans lequel le rayon A de la gorge (5) comporte une valeur comprise entre 0.2 et 2 mm.

7. Crampon (1) pour ensemble selon l'une des revendications 1 à 6, comportant une mise (2) disposée à l'une des extrémités axiales, une tête (3) disposée à l'autre extrémité axiale, un corps central (4) disposé entre ladite mise (2) et ladite tête (3), **caractérisé en ce que** le corps central (4) comporte au moins une gorge périphérique (5) prévue sur le profil externe dudit corps (4), située à une distance C du haut du corps central (4) dudit crampon, ledit crampon étant adapté pour insertion dans une alvéole comportant au moins un bossage (24) correspondant situé à une distance D de la surface de la bande de roulement du pneumatique, la distance D étant comprise entre 0.6*C et 1.2*C et de préférence sensiblement égale à C.

8. Pneumatique pour ensemble selon l'une des revendications 1 à 6, pourvu d'une pluralité d'alvéoles (20), chaque alvéole comportant un portion cylindrique (21) ouverte sur l'extérieur de la bande de roulement (30) du pneumatique chacune desdites alvéoles (20) comportant au moins un bossage périphérique (24) agencé dans la portion cylindrique (21) et situé à une distance D de la surface de la bande de roulement du pneumatique, chaque alvéole (20) étant adaptée pour coopérer avec un crampon (1), comportant une mise (2) disposée à l'une des extrémités axiales, une tête (3) disposée à l'autre extrémité axiale, un corps central (4) disposé entre ladite mise (2) et ladite tête (3),ledit corps central (4) de chacun des crampons comportant au moins une gorge périphérique (5) située à une distance C du haut du corps central (4) dudit crampon, et la distance D étant comprise entre 0.6*C et 1.2*C et de préférence sensiblement égale à C.

## Claims

1. Assembly comprising:
• a tyre provided with a plurality of stud holes (20), each stud hole comprising a cylindrical portion (21) open to the outside of the tyre tread (30) and being designed to cooperate with a stud (1),
• a plurality of studs, each comprising an insert (2) arranged at one of the axial ends, a head (3) arranged at the other axial end and a central body (4) arranged between said insert (2) and said head (3),
• said assembly being **characterized in that:**
• each of said stud holes (20) comprises at least one peripheral bulge (24) arranged in the cylindrical portion (21) located at a distance D from the surface of the tyre tread (30);
• said central body (4) of each of the studs comprises at least one peripheral groove (5) located at a distance C from the top of the central body (4) of said stud;
• the distance D being comprised between 0.6*C and 1.2*C and preferably being substantially equal to C.

2. Assembly according to Claim 1, in which the groove (5) of the studs (1) occupies the entire periphery of the stud.

3. Assembly according to Claim 2, in which the bulge (24) of the stud holes occupies the entire periphery of the stud hole.

4. Assembly according to Claim 1 in which each groove has a radius A measured from a point located outside thereof, and each bulge has a radius B measured from a point located outside thereof, each corresponding stud and stud hole being dimensioned such that the radius A of the groove (5) of the stud
(1) is less than the radius B of the corresponding bulge (24) of the stud hole.

5. Assembly according to Claim 4, in which the radius A of the groove (5) of the stud (1) is substantially equal to half the radius B of the bulge (24) of the stud hole (20).

6. Assembly according to one of Claims 2 to 5, in which the radius A of the groove (5) has a value of between 0.2 and 2 mm.

7. Stud (1) for assembly according to one of Claims 1 to 6, comprising an insert (2) arranged at one of the axial ends, a head (3) arranged at the other axial end, a central body (4) arranged between said insert (2) and said head (3), **characterized in that** the central body (4) comprises at least one peripheral groove (5) provided on the external profile of said body (4), located at a distance C from the top of the central body (4) of said stud, said stud being designed for insertion in a stud hole, comprising at least one corresponding bulge (24) located at a distance D from the surface of the tyre tread, the distance D being comprised between 0.6*C and 1.2*C and preferably being substantially equal to C.

8. Tyre for assembly according to one of Claims 1 to 6, provided with a plurality of stud holes (20), each stud hole comprising a cylindrical portion (21) open to the outside of the tyre tread (30), each of said stud holes (20) comprising at least one peripheral bulge (24) arranged in the cylindrical portion (21) and located at a distance D from the surface of the tyre tread, each stud hole (20) being designed to cooperate with a stud (1), comprising an insert (2) arranged at one of the axial ends, a head (3) arranged at the other axial end and a central body (4) arranged between said insert (2) and said head (3), said central body (4) of each of the studs comprising at least one peripheral groove (5) located at a distance C from the top of the central body (4) of said stud, and the distance D being comprised between 0.6*C and 1.2*C and preferably being substantially equal to C.

## Patentansprüche

1. Anordnung, mit:
- einem Luftreifen, der mit mehreren Kammern (20) versehen ist, wobei jede Kammer einen zur Außenseite der Lauffläche (30) des Luftreifens offenen zylindrischen Abschnitt (21) aufweist und dazu ausgelegt ist, mit einem Nagel (1) zusammenzuwirken,
- mehreren Nägeln, wovon jeder einen Eingriffabschnitt (2), der an einem der axialen Enden angeordnet ist, einen am anderen axialen Ende angeordneten Kopf (3) und einen zwischen dem Eingriffabschnitt (2) und dem Kopf (3) angeordneten Mittelkörper (4) enthält,
- wobei die Anordnung **dadurch gekennzeichnet ist, dass**:
- jede der Kammern (20) wenigstens eine Umfangserhebung (24) aufweist, die in dem zylindrischen Abschnitt (21) angeordnet ist und sich in einem Abstand D von der Oberfläche der Lauffläche (30) des Luftreifens befindet;
- der Mittelkörper (4) jedes der Nägel wenigstens eine Umfangskehle (5) aufweist, die sich in einem Abstand C von der Oberseite des Mittelkörpers (4) des Nagels befindet;
- der Abstand D im Bereich von 0,6 · C bis 1,2 · C liegt und vorzugsweise im Wesentlichen gleich C ist.

2. Anordnung nach Anspruch 1, wobei die Kehle (5) der Nägel (1) den gesamten Umfang des Nagels einnimmt.

3. Anordnung nach Anspruch 2, wobei die Erhebung (24) der Kammern den gesamten Umfang der Kammer einnimmt.

4. Anordnung nach Anspruch 1, wobei jede Kehle einen Radius A besitzt, der von einem Punkt aus gemessen wird, der sich außerhalb ihrer befindet, wobei jede Erhebung einen Radius B aufweist, der von einem Punkt aus gemessen wird, der sich außerhalb ihrer befindet, wobei jeder Nagel und jede entsprechende Kammer so bemessen sind, dass der Radius A der Kehle (5) des Nagels (1) kleiner ist als der Radius B der entsprechenden Erhebung (24) der Kammer.

5. Anordnung nach Anspruch 4, wobei der Radius A der Kehle (5) des Nagels (1) im Wesentlichen gleich dem halben Radius B der Erhebung (24) der Kammer (20) ist.

6. Anordnung nach einem der Ansprüche 2 bis 5, wobei der Radius A der Kehle (5) einen Wert im Bereich von 0,2 bis 2 mm besitzt.

7. Nagel (1) für die Anordnung nach einem der Ansprüche 1 bis 6, mit einem Eingriffabschnitt (2), der an einem der axialen Enden angeordnet ist, einem Kopf (3), der am anderen axialen Ende angeordnet ist, und einem Mittelkörper (4), der zwischen dem Eingriffabschnitt (2) und dem Kopf (3) angeordnet ist,
**dadurch gekennzeichnet, dass** der Mittelkörper (4) wenigstens eine Umfangskehle (5) aufweist, die im Außenprofil des Körpers (4) vorgesehen ist und sich in einem Abstand C von der Oberseite des Mittelabschnitts (4) des Nagels befindet, wobei der Nagel dazu ausgelegt ist, in eine Kammer eingesetzt zu werden, die wenigstens eine entsprechende Erhebung (24) aufweist, die sich in einem Abstand D von der Oberfläche der Lauffläche des Luftreifens befindet, wobei der Abstand D im Bereich von 0,6 · C bis 1,2 · C liegt und vorzugsweise im Wesentlichen gleich C ist.

8. Luftreifen für die Anordnung nach einem der Ansprüche 1 bis 6, der mit mehreren Kammern (20) versehen ist, wobei jede Kammer einen zur Außenseite der Lauffläche (30) des Luftreifens offenen zylindrischen Abschnitt (21) aufweist, wobei jede der Kammern (20) wenigstens eine Umfangserhebung (24) aufweist, die im zylindrischen Abschnitt (21) angeordnet ist und sich in einem Abstand D von der Oberfläche der Lauffläche des Luftreifens befindet, wobei jede Kammer (20) dazu ausgelegt ist, mit einem Nagel (1) zusammenzuwirken, der einen Eingriffabschnitt (2), der an einem der axialen Enden angeordnet ist, einen Kopf (3), der am anderen axialen Ende angeordnet ist, und einen Mittelkörper (4), der zwischen dem Eingriffabschnitt (2) und dem Kopf (3) angeordnet ist, enthält, wobei der Mittelkörper (4) jedes der Nägel wenigstens eine Umfangskehle (5) aufweist, die sich in einem Abstand C von der Oberseite des Mittelkörpers (4) des Nagels befindet, wobei der Abstand D im Bereich von 0,6 · C bis 1,2 · C liegt und vorzugsweise im Wesentlichen gleich C ist.
